# EUROPÄISCHE PATENTSCHRIFT

(11) **EP 2 843 340 B1**
(45) Veröffentlichungstag und Bekanntmachung des Hinweises auf die Patenterteilung: **15.05.2019**
(21) Anmeldenummer: 13005993.4
(22) Anmeldetag: 20.12.2013
(51) Int. Cl.: F27B 7/20, F23N 5/08, F27B 7/42, F27D 19/00, F27D 21/00, C22B 7/00, C22B 21/00

(54) **Verfahren zur Detektion eines Verbrennungsgases in einem Ofen und Ofen**
Method for detecting a combustible gas in a furnace and furnace
Procédé de détection d'un gaz combustible dans un four et four

(30) Priorität: 29.08.2013 DE 102013014404
(43) Veröffentlichungstag der Anmeldung: 04.03.2015
(73) Patentinhaber: Linde Aktiengesellschaft, 80331 München (DE)
(72) Erfinder: Raasch, Burghard, 37581 Bad Gandersheim (DE); Neischwander, Michael, 35586 Wetzlar (DE); Goldbach, Joachim, 23611 Bad Schwartau (DE)

(56) Entgegenhaltungen:
- AT-A4- 506 950
- DE-A1- 19 509 412
- DE-A1- 19 710 206

## Beschreibung

Die Erfindung betrifft ein Verfahren sowie eine Vorrichtung zur Detektion eines Verbrennungsgases in einem Ofen, der mittels eines Brenners und einer Sauerstoffzufuhr beheizt wird.

### Stand der Technik

In Öfen, die mittels eines Brenners beheizt werden, wird oftmals Sauerstoff, beispielsweise mittels einer Sauerstofflanze, zugeführt. Eine Menge an zugeführtem Sauerstoff wird dabei in Abhängigkeit von Verbrennungsgasen im Ofen, insbesondere Kohlenmonoxid, zugeführt. Um die Menge an Kohlenmonoxid zu bestimmen, sind zumeist Messsysteme in einem Abgasstrom, beispielsweise in einem Abgaskanal oder in einem Abgasfuchs, vorhanden.

Die DE 101 14 179 A1 beschreibt beispielsweise einen Drehtrommelofen zum Einschmelzen von Aluminiumschrott. In einem Abgaskanal des Drehtrommelofens sind dabei ein Sauerstoffdetektor und ein Kohlenmonoxiddetektor vorhanden. Ein ähnliches System zeigt die EP 0 756 014 A1.

Derartige Messsysteme bestimmen die Menge an Kohlenmonoxid somit außerhalb des Ofens bzw. außerhalb eines Verbrennungsraums des Ofens. Die Kohlenmonoxidmessung erfolgt somit zeitverzögert. Somit kann auch eine Regelung bzw. Zuführung von Sauerstoff in Abhängigkeit der bestimmten Kohlenmonoxidmenge nicht optimal durchgeführt werden. Des Weiteren ist die Kohlenmonoxidmessung im Abgasstrom störanfällig und wartungsintensiv, da feste und flüssige Verunreinigungen entstehen können.

Der Erfindung liegt daher die Aufgabe zu Grunde, eine Möglichkeit bereitzustellen, um eine Menge an Verbrennungsgasen in einem Ofen präziser und weniger zeitverzögert zu bestimmen.

### Offenbarung der Erfindung

Diese Aufgabe wird durch ein Verfahren und eine Vorrichtung zur Detektion eines Verbrennungsgases in einem Ofen gemäß den unabhängigen Patentansprüchen gelöst. Der Ofen wird dabei mittels eines Brenners und einer Sauerstoffzufuhr beheizt. Erfindungsgemäß wird ein UV-Anteil in einem Spektrum einer Flamme in dem Ofen detektiert.

### Vorteile der Erfindung

Die Erfindung macht sich zu Nutze, dass durch die Zufuhr von Sauerstoff eine Zirkulation einer Ofenatmosphäre bzw. einer Atmosphäre in dem Ofen angeregt wird. Diese Ofenatmosphäre setzt sich dabei aus dem zu detektierenden Verbrennungsgas zusammen und gegebenenfalls aus noch weiteren Verbrennungsgasen. Diese Zirkulation wird insbesondere dann angeregt, wenn der Sauerstoff mit hoher Geschwindigkeit und somit mit einem hohen Impuls dem Ofen zugeführt wird. An der Sauerstoffzufuhr selbst werden somit die Ofenatmosphäre und das in dem Ofen befindliche zu detektierende Verbrennungsgas angesaugt. Das Verbrennungsgas entzündet sich dabei, insbesondere direkt an der Sauerstoffzufuhr.

Erfindungsgemäß wird die Flamme dieses entzündeten Verbrennungsgases bzw. das Spektrum dieser Flamme genutzt, um das in dem Ofen vorhandene Verbrennungsgas zu detektieren. Das Verbrennungsgas wird somit direkt in dem Ofen, bzw. in einem Verbrennungsraum des Ofens detektiert. Diese Detektion erfolgt somit nicht zeitverzögert, das Verbrennungsgas wird detektiert, wenn es sich aktuell in dem Ofen befindet.

Das erfindungsgemäße Verfahren ist leicht und kostengünstig zu realisieren. Das Verfahren kann beispielsweise mit einer kostengünstigen UV-Sonde und/oder einem Spektrometer realisiert werden, welche problemlos in den Ofen integriert werden können. Das erfindungsgemäße Verfahren bietet eine wartungsarme und störungsunanfällige Möglichkeit, das Verbrennungsgas in dem Ofen präzise und nicht zeitverzögert zu detektieren.

Vorteilhafterweise wird aus dem detektierten UV-Anteil des Spektrums der Flamme eine Menge des Verbrennungsgases bestimmt. Je höher ein Anteil des zu detektierenden Verbrennungsgases an der Ofenatmosphäre ist, desto höher ist die Flammenausbildung und desto ausgeprägter ist der UV-Anteil des Flammenspektrums. Diese Bestimmung erfolgt somit nicht zeitverzögert, sondern es wird die Menge an Verbrennungsgas bestimmt, welche sich aktuell in dem Ofen befindet.

Vorteilhafterweise wird eine Menge des durch die Sauerstoffzufuhr zugeführten Sauerstoffs in Abhängigkeit von dem detektierten Verbrennungsgas eingestellt bzw. gesteuert bzw. geregelt. Durch die nicht zeitverzögerte Detektion des Verbrennungsgases bzw. Bestimmung der Menge des Verbrennungsgases wird die zugeführte Sauerstoffmenge besonders präzise eingestellt, angepasst an das aktuell in dem Ofen vorhandene Verbrennungsgas. Insbesondere wird somit ein stöchiometrisches Verbrennungsverhältnis eingestellt, bei dem eine vollständige Verbrennung stattfindet.

Vorzugsweise wird der UV-Anteil in dem Spektrum der Flamme in der Sauerstoffzufuhr detektiert. Die Sauerstoffzufuhr ist dabei bevorzugt als eine Sauerstofflanze ausgebildet und der UV-Anteil in dem Spektrum der Flamme wird bevorzugt in dieser Sauerstofflanze detektiert. Die Sauerstofflanze führt den Sauerstoff mit hoher Geschwindigkeit und hohem Impuls dem Ofen zu. Wie bereits erläutert, wird dadurch eine Zirkulation der Ofenatmosphäre angeregt und das Verbrennungsgas wird an der Sauerstofflanze bzw. Sauerstoffzufuhr angesaugt. Insbesondere entzündet sich das Verbrennungsgas dabei direkt an der Sauerstofflanze bzw. Sauerstoffzufuhr und die entsprechende Flamme brennt direkt vor der Sauerstofflanze bzw. Sauerstoffzufuhr. Somit bietet es sich besonders an, den UV-Anteil dieser Flamme direkt in der Sauerstofflanze bzw. Sauerstoffzufuhr selbst zu bestimmen. Bevorzugt wird die Bestimmung des UV-Anteils dabei mittels einer zweckmäßigen Messsonde durchgeführt, die direkt in der Sauerstofflanze bzw. in der Sauerstoffzufuhr angebracht ist. Die Messsonde ist somit direkt auf die Flamme gerichtet und kann den UV-Anteil bestmöglich und so präzise wie möglich bestimmen. Des Weiteren ist die Messsonde dabei von anderen (Stör-)Lichtquellen abgeschirmt, insbesondere von einer Flamme des Brenners des Ofens. Messsonde und Sauerstoffzufuhr können somit in einem Bauteil realisiert werden.

In einer bevorzugten Ausgestaltung der Erfindung ist der Ofen als ein Drehtrommelofen ausgebildet. Weiter bevorzugt wird der Ofen bzw. insbesondere der Drehtrommelofen für eine Einschmelzung von kontaminiertem Aluminiumschrott genutzt. Durch eine Flamme des Brenners wird der Aluminiumschrott erhitzt, was zu einer Pyrolyse organischer Komponenten des Aluminiumschrotts führt. Bei dieser Pyrolyse entsteht Kohlenmonoxid als Verbrennungsgas. Durch die Zufuhr von Sauerstoff wird dieses Kohlenmonoxid zu Kohlendioxid verbrannt. Das erfindungsgemäße Verfahren eignet sich für diese Anwendung besonders. Durch die präzise und nicht zeitverzögerte Detektion des Kohlenmonoxids bzw. Bestimmung der Menge des Kohlenmonoxids als Verbrennungsgas kann die Menge an zugeführtem Sauerstoff präzise eingestellt werden, damit sämtliches Kohlenmonoxid und sämtlicher zugeführter Sauerstoff in einem stöchiometrischen Verbrennungsverhältnis zu Kohlendioxid verbrannt werden. Ein derartiger Drehtrommelofen bzw. ein derartiges Verfahren zum Einschmelzen von kontaminiertem Aluminiumschrott wird von derselben Anmelderin unter dem Namen WASTOX vertrieben. Für eine detailliertere Beschreibung sei auf die DE 101 14 179 A1 verwiesen.

Die Erfindung soll jedoch nicht auf Drehtrommelöfen beschränkt sein. Die Erfindung eignet sich insbesondere für sämtliche Arten von Schmelzöfen, die Metallschrotte, insbesondere Metallschrotte mit kohlenstoffhaltigen Verunreinigungen, verarbeiten.

Das erfindungsgemäße Verfahren eignet sich besonders bevorzugt für die Detektion bzw. Bestimmung von Kohlenmonoxid als Verbrennungsgas. Das erfindungsgemäße Verfahren eignet sich aber auch für andere Arten von Verbrennungsgasen. Insbesondere eignet sich das erfindungsgemäße Verfahren für Verbrennungsgase, deren Verbrennung eine Flamme mit hohem UV-Anteil hervorruft.

Die Erfindung betrifft weiterhin eine Vorrichtung zur Detektion eines Verbrennungsgases in einem Ofen. Ausgestaltungen dieser erfindungsgemäßen Vorrichtung ergeben sich aus der obigen Beschreibung des erfindungsgemäßen Verfahrens in analoger Art und Weise.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

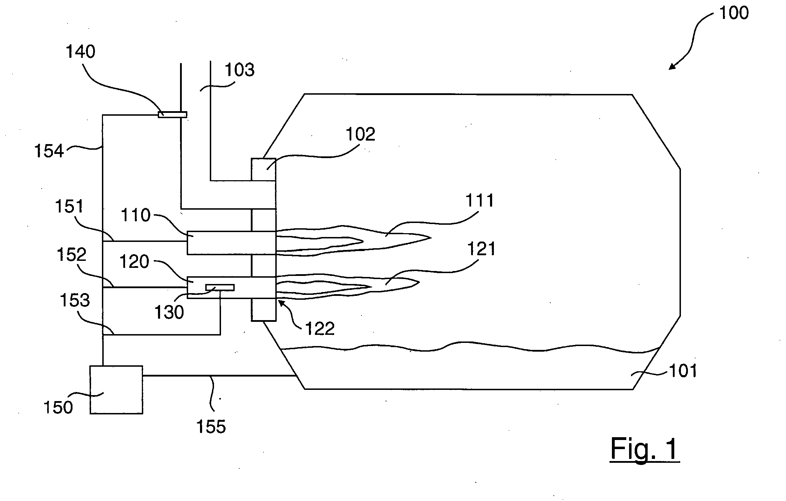

- Figur 1: zeigt schematisch eine bevorzugte Ausgestaltung einer erfindungsgemäßen Vorrichtung als einen Drehtrommelofen, der dazu eingerichtet ist, eine bevorzugte Ausführungsform eines erfindungsgemäßen Verfahrens durchzuführen.

In der einzigen Figur 1 ist ein als Drehtrommelofen ausgebildeter Ofen schematisch dargestellt und mit 100 bezeichnet. Der Drehtrommelofen 100 ist in diesem speziellen Beispiel dazu eingerichtet, kontaminierten Aluminiumschrott 101 einzuschmelzen. Mittels einer Tür 102 kann der Aluminiumschrott 101 in den Drehtrommelofen 100 eingebracht werden. Des Weiteren wir der Drehtrommelofen 100 mittels der Tür 102 verschlossen. Der Drehtrommelofen 100 weist weiterhin einen Brenner 110 auf, der beispielsweise in der Tür 102 angeordnet sein kann.

Eine Brennerflamme 111 des Brenners 110 erhitzt den Aluminiumschrott 101, was zu einer Pyrolyse des Aluminiumschrotts 101, insbesondere von organischen Komponenten des Aluminiumschrotts 101, führt. Dabei entsteht Kohlenmonoxid als Verbrennungsgas. Über einen Abgaskanal 103 wird Abgas in einem Abgasstrom aus dem Drehtrommelofen 100 abgeführt.

Der Drehtrommelofen 100 weist weiterhin eine als Sauerstofflanze 120 ausgebildete Sauerstoffzufuhr auf. Diese Sauerstofflanze 120 kann beispielsweise ebenfalls in der Tür 102 angeordnet sein. Mittels der Sauerstofflanze 120 wird dem Drehtrommelofen 100 eine Menge an Sauerstoff zugeführt. Insbesondere wird diese zugeführte Sauerstoffmenge derart bemessen, dass ein stöchiometrisches Verbrennungsverhältnis erreicht wird.

Durch die hohe Geschwindigkeit bzw. den hohen Impuls, mit welcher die Sauerstoffmenge durch die Sauerstofflanze 120 dem Drehtrommelofen 100 zugeführt wird, zirkuliert das Kohlenmonoxid in dem Drehtrommelofen 100 und wird von der Sauerstofflanze 120 angesaugt. An einem Ende 122 der Sauerstofflanze 120 entzündet sich das Kohlenmonoxid dabei. Somit entsteht an dem Ende 122 der Sauerstofflanze 120 eine Flamme 121. Der Drehtrommelofen 100 bzw. eine Recheneinheit 150 sind dazu eingerichtet, eine bevorzugte Ausführungsform eines erfindungsgemäßen Verfahrens durchzuführen und einen UV-Anteil eines Spektrums dieser Flamme 121 zu detektieren.

In der Sauerstofflanze 120 ist dabei eine Messsonde 130 angebracht. Die Messsonde 130 ist dabei insbesondere als eine UV-Sonde oder als ein Spektrometer ausgebildet. Die Messsonde 130 ist auf das Ende 122 der Sauerstofflanze 120 gerichtet und "blickt" direkt in die Flamme 121. Die Messsonde 130 erfasst das Spektrum der Flamme 121. Die Messsonde 130 ist über eine Verbindung 153 mit der Recheneinheit 150 verbunden. Die Recheneinheit 150 wertet das Spektrum der Flamme 121 aus und detektiert bzw. bestimmt den UV-Anteil des Spektrums. Aus diesem UV-Anteil bestimmt die Recheneinheit 150 eine Menge an Kohlenmonoxid in dem Drehtrommelofen 100.

Diese bestimmte Menge an Kohlenmonoxid wird genutzt, um die Menge an durch die Sauerstofflanze 120 zugeführtem Sauerstoff insbesondere im Zuge einer Regelung einzustellen. Die Recheneinheit 150 berechnet in Abhängigkeit von der bestimmten Menge an Kohlenmonoxid die Menge an Sauerstoff, um das stöchiometrische Verbrennungsverhältnis zu erreichen. Demgemäß steuert die Recheneinheit 150 die Sauerstofflanze 120 an, angedeutet durch Bezugszeichen 152, damit die bestimmte Menge an Sauerstoff dem Drehtrommelofen 100 zugeführt wird.

Alternativ kann bei einer Detektion von vorhandenem Kohlenmonoxid, beispielsweise oberhalb eines Schwellwerts, die Sauerstoffzufuhr erhöht werden, bis der Kohlenmonoxidgehalt unterhalb des Schwellwerts abgenommen hat oder auf Null zurückgegangen ist. In diesem Fall muss nicht laufend die Menge von Kohlenmonoxid bestimmt werden.

In dem Abgaskanal 103 ist insbesondere ein Thermoelement 140 angebracht. Mittels des Thermoelements 140 kann beispielsweise eine Temperatur und/oder eine Zusammensetzung des Abgases in dem Abgaskanal 103 bestimmt werden. Über eine Verbindung 154 ist das Thermoelement 140 mit der Recheneinheit 150 verbunden.

Insbesondere kann das Steuergerät die von dem Thermoelement 140 bestimmten Daten für die Regelung der durch die Sauerstofflanze 120 zugeführten Sauerstoffmenge berücksichtigen. Des Weiteren steuert die Recheneinheit zweckmäßig eine Drehbewegung des Drehtrommelofens 100, angedeutet durch das Bezugszeichen 155. Insbesondere steuert die Recheneinheit die Drehbewegung des Drehtrommelofens 100 in Abhängigkeit eines von dem Thermoelement 140 bestimmten Sauerstoffgehalts des Abgases im Abgaskanal 103.

### Bezugszeichenliste

- 100: Ofen, Drehtrommelofen
- 101: Aluminiumschrott
- 102: Tür
- 103: Abgaskanal
- 110: Brenner
- 111: Brennerflamme
- 120: Sauerstoffzufuhr, Sauerstofflanze
- 121: Flamme der Sauerstoffzufuhr, Sauerstofflanze
- 122: Ende der Sauerstoffzufuhr, Sauerstofflanze
- 130: Messsonde, UV-Sonde
- 140: Thermoelement
- 150: Recheneinheit
- 150 bis 155: Verbindungen, Ansteuerungen

## Patentansprüche

1. Verfahren zur Detektion eines Verbrennungsgases in einem Ofen (100), der mittels eines Brenners (110) und einer Sauerstoffzufuhr (120) beheizt wird, wobei ein UV-Anteil in einem Spektrum einer Flamme (121) in dem Ofen (100) detektiert wird,
**dadurch gekennzeichnet, dass**
zur Zufuhr von Sauerstoff eine Sauerstofflanze (120) verwendet wird und wobei der UV-Anteil in dem Spektrum der an der Sauerstofflanze (120) brennenden Flamme (121) detektiert wird.

2. Verfahren nach Anspruch 1, wobei aus dem detektierten UV-Anteil in dem Spektrum der Flamme (121) eine Menge des Verbrennungsgases bestimmt wird.

3. Verfahren nach Anspruch 1 oder 2, wobei abhängig von dem detektierten Verbrennungsgas eine Menge des durch die Sauerstoffzufuhr (120) zugeführten Sauerstoffs eingestellt wird.

4. Verfahren nach einem der vorstehenden Ansprüche, wobei der UV-Anteil mittels einer in der Sauerstofflanze (120) angeordneten Messsonde (130) detektiert wird.

5. Verfahren nach einem der vorstehenden Ansprüche, wobei ein Drehtrommelofen (100) als Ofen genutzt wird.

6. Verfahren nach einem der vorstehenden Ansprüche, wobei in dem Ofen (100) kontaminierter Aluminiumschrott (101) eingeschmolzen wird.

7. Verfahren nach einem der vorstehenden Ansprüche, wobei als Verbrennungsgas Kohlenmonoxid detektiert wird.

8. Ofen mit einer Vorrichtung zum Detektieren eines Verbrennungsgases, wobei der Ofen (100) einen Brenner (110) und eine Sauerstoffzufuhr (120) aufweist, wobei eine Messsonde (130) in dem Ofen angeordnet und dazu eingerichtet ist, einen UV-Anteil in einem Spektrum einer Flamme (121) in dem Ofen (100) zu detektieren,
**dadurch gekennzeichnet, dass**
die Messsonde (130) in der Sauerstoffzufuhr (120) angeordnet ist.

9. Vorrichtung nach Anspruch 8, wobei die Sauerstoffzufuhr (120) als eine Sauerstofflanze ausgebildet ist.

10. Vorrichtung nach einem der Ansprüche 8 oder 9, wobei eine Recheneinheit (150) dazu eingerichtet ist, aus dem detektierten UV-Anteil in dem Spektrum der Flamme (121) eine Menge des Verbrennungsgases zu bestimmen.

11. Vorrichtung nach einem der Ansprüche 8 bis 10, wobei die Recheneinheit (150) dazu eingerichtet ist, abhängig von dem detektierten Verbrennungsgas eine Menge des durch die Sauerstoffzufuhr (120) zugeführten Sauerstoffs einzustellen.

## Claims

1. Method for detecting a combustion gas in a furnace (100), which is heated by means of a burner (110) and an oxygen supply (120), wherein a UV component in a spectrum of a flame (121) in the furnace (100) is detected,
**characterized in that**
an oxygen lance (120) is used for supplying oxygen and the UV component in the spectrum of the flame (121) burning at the oxygen lance (120) is detected.

2. Method according to Claim 1, wherein an amount of the combustion gas is determined from the detected UV component in the spectrum of the flame (121).

3. Method according to Claim 1 or 2, wherein an amount of the oxygen supplied by the oxygen supply (120) is set depending on the detected combustion gas.

4. Method according to one of the preceding claims, wherein the UV component is detected by means of a measuring probe (130) arranged in the oxygen lance (120).

5. Method according to one of the preceding claims, wherein a rotary drum furnace (100) is used as the furnace.

6. Method according to one of the preceding claims, wherein contaminated aluminium scrap (101) is melted in the furnace (100).

7. Method according to one of the preceding claims, wherein carbon monoxide is detected as the combustion gas.

8. Furnace with a device for detecting a combustion gas, wherein the furnace (100) has a burner (110) and an oxygen supply (120), wherein a measuring probe (130) is arranged in the furnace and is designed to detect a UV component in a spectrum of a flame (121) in the furnace (100),
**characterized in that**
the measuring probe (130) is arranged in the oxygen supply (120).

9. Device according to Claim 8, wherein the oxygen supply (120) is formed as an oxygen lance.

10. Device according to either of Claims 8 and 9, wherein a computing unit (150) is designed to determine an amount of the combustion gas from the detected UV component in the spectrum of the flame (121).

11. Device according to one of Claims 8 to 10, wherein the computing unit (150) is designed to set an amount of the oxygen supplied by the oxygen supply (120) depending on the detected combustion gas.

## Revendications

1. Procédé de détection d'un gaz combustible dans un four (100), qui est chauffé au moyen d'un brûleur (110) et d'une arrivée d'oxygène (120), dans lequel on détecte une fraction UV dans un spectre d'une flamme (121) dans le four (100), **caractérisé en ce que** l'on utilise pour l'arrivée d'oxygène une lance à oxygène (120) et dans lequel on détecte la fraction UV dans le spectre de la flamme (121) brûlant à la lance à oxygène (120).

2. Procédé selon la revendication 1, dans lequel on détermine une quantité de gaz combustible à partir de la fraction UV détectée dans le spectre de la flamme (121).

3. Procédé selon la revendication 1 ou 2, dans lequel on règle un débit de l'oxygène fourni par l'arrivée d'oxygène (120) en fonction du gaz combustible détecté.

4. Procédé selon l'une quelconque des revendications précédentes, dans lequel on détecte la fraction UV au moyen d'une sonde de mesure (130) disposée dans la lance à oxygène (120).

5. Procédé selon l'une quelconque des revendications précédentes, dans lequel on utilise comme four un four à tambour rotatif (100).

6. Procédé selon l'une quelconque des revendications précédentes, dans lequel on fond dans le four (100) de la mitraille d'aluminium (101) contaminée.

7. Procédé selon l'une quelconque des revendications précédentes, dans lequel on détecte du monoxyde de carbone en tant que gaz combustible.

8. Four équipé d'un dispositif de détection d'un gaz combustible, dans lequel le four (100) présente un brûleur (110) et une arrivée d'oxygène (120), dans lequel une sonde de mesure (130) est disposée dans le four et est conçue pour détecter une fraction UV dans un spectre d'une flamme (121) dans le four (100), **caractérisé en ce que** la sonde de mesure (130) est disposée dans l'arrivée d'oxygène (120).

9. Dispositif selon la revendication 8, dans lequel l'arrivée d'oxygène (120) est formée par une lance à oxygène.

10. Dispositif selon une des revendications 8 ou 9, dans lequel une unité de calcul (150) est conçue pour déterminer une quantité du gaz combustible à partir de la fraction UV détectée dans le spectre de la flamme (121).

11. Dispositif selon l'une quelconque des revendications 8 à 10, dans lequel l'unité de calcul (150) est conçue pour régler un débit de l'oxygène fourni par l'arrivée d'oxygène (120) en fonction du gaz combustible détecté.
